**Europäisches Patentamt**

**European Patent Office**

**Office européen des brevets**

(19)

(11) Veröffentlichungsnummer : **0 342 476 B1**

(12)

# EUROPÄISCHE PATENTSCHRIFT

(45) Veröffentlichungstag der Patentschrift :
11.09.91 Patentblatt 91/37

(51) Int. Cl.⁵ : **B65G 69/28**, B65G 69/24

(21) Anmeldenummer : **89108294.3**

(22) Anmeldetag : **09.05.89**

(54) Überladebrücke für Rampen.

(30) Priorität : **17.05.88 DE 3816719**
**22.11.88 DE 3839342**

(43) Veröffentlichungstag der Anmeldung :
**23.11.89 Patentblatt 89/47**

(45) Bekanntmachung des Hinweises auf die
Patenterteilung :
**11.09.91 Patentblatt 91/37**

(84) Benannte Vertragsstaaten :
**AT BE CH DE ES FR GB GR IT LI LU NL SE**

(56) Entgegenhaltungen :
**CH-A- 576 387**
**DE-A- 2 552 433**
**DE-A- 2 851 502**
**US-A- 2 714 735**

(73) Patentinhaber : **Alten, Kurt**
**Ringstrasse 14**
**W-3015 Wennigsen (DE)**

(72) Erfinder : **Alten, Kurt**
**Ringstrasse 14**
**W-3015 Wennigsen (DE)**

(74) Vertreter : **Depmeyer, Lothar**
**Auf der Höchte 30**
**W-3008 Garbsen 1 (DE)**

## Beschreibung

Die Erfindung bezieht sich auf eine Überladebrücke für Rampen gemäß dem Oberbegriff des Anspruchs 1. Eine solche Überladebrücke ist aus DE-A-2552433 bekannt.

Bei den bekannten Überladebrücken dieser Ausführung sind die schwenkbaren Bereiche als gegen eine Rückstellkraft einstossbare Zungen ausgebildet, um so die Überladebrücke an unterschiedlich breite Plattformen der zu be- bzw. entladenden Fahrzeuge anpassen zu können. Diese Anpassung erfolgt selbsttätig ; die Seitenwände der Fahrzeuge erfassen die ihnen im Wege stehende Zunge und verdrängen diese nach hinten, während sich die zwischen den eingestossenen Zungen befindlichen Teile der Verlängerung auf der Plattform abstützen. Diese Anpassungsmöglichkeit ist jedoch beschränkt und nur für die sich ohnehin nur durch geringe Breitenunterschiede voneinander unterscheidenden Fahrzeuge bestimmt.

Der Erfindung liegt die Aufgabe zugrunde, die eingangs erwähnten Überladebrücken so mit einer Abstützmöglichkeit über die gesamte Brückenbreite auszuführen, dass die wirksame Breite der Verlängerung erheblich vermindert werden kann z.B. in der Weise, dass sogar Fahrzeuge be- oder entladen werden können, die nur über ein- oder halbseitige Ladeöffnungen verfügen.

Zur Lösung dieser Aufgabe dienen erfindungsgemäss die Merkmale des Kennzeichnenden Teils des Anspruchs 1. Demgemäss sind die schwenkbaren Bereiche — vorzugsweise ist allerdings nur ein einziger Bereich sich über etwa eine Hälfte der Brückenbreite erstreckend vorgesehen — mit einem eigenen Antrieb ausgestattet, der die beiden erwähnten Betriebsstellungen der Bereiche zulässt.

Ist der Bereich nach unten geklappt, so ist die wirksame Breite der Verlängerung auf etwa die Hälfte verringert ; ist der Bereich ausgeklappt, so kann die gesamte Brückenbreite ausgenutzt werden, wie dies bei Brücken der Fall ist, deren Verlängerung insgesamt starr ausgeführt ist.

Der Schwenkzylinder wird vorzugsweise in der Weise mit dem Hubzylinder der Brückenplatte verbunden, dass er mit dem Anheben der Brückenplatte, also mit der Beaufschlagung des Hubzylinders ebenfalls unter Druck gesetzt wird, um so ein Ausklappen zu vollziehen. Ein in die Zuleitung des Schwenkzylinders eingeschaltetes Ventil erlaubt eine Absperrung, wenn mit dem Anheben der Brückenplatte die schwenkbaren Bereiche nicht ausgeklappt werden sollen.

Zweckmässigerweise wird die Aufteilung der Verlängerung so vorgenommen, dass eine Hälfte im obigen Sinne starr und die andere Hälfte der Brücke schwenkbar ausgeführt wird.

Weitere Einzelheiten der Erfindung werden anhand der Zeichnung erläutert, in der ein Ausführungsbeispiel der Erfindung dargestellt ist. Es zeigen :

Fig. 1    eine Überladebrücke für Rampen in schaubildlicher Darstellung, und zwar bei ausgefahrener Verlängerung und

Fig. 2    einen Teillängsschnitt nach der Linie II-II von Fig. 1 unter Hinzufügung weiterer Bauteile der Überladebrücke allerdings bei eingezogener Verlängerung.

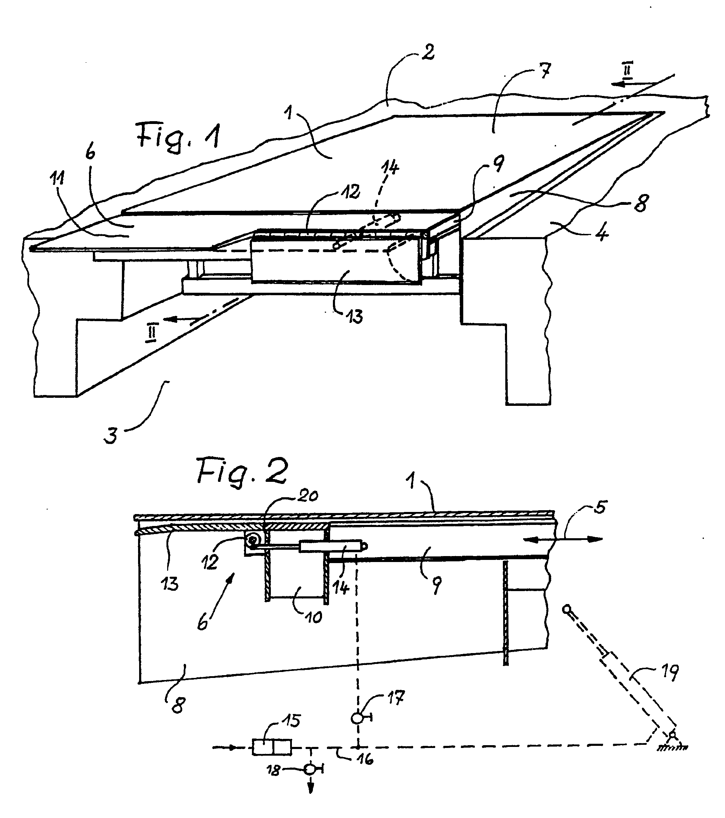

Die Brückenplatte 1 ist an ihrem hinteren Ende um eine waagerechte Achse an der Rampe 2 schwenkbar gelagert ; dabei befindet sich die Brückenplatte 1 in einer Ausnehmung 3 der Rampe 2. In der Ruhestellung schliesst die Brückenplatte 1 mit der Oberfläche 4 der Rampe 2 ab, sie kann jedoch nach oben — siehe Fig. 1 — oder nach unten in die Ausnehmung 3 geschwenkt werden. Am freien Ende der Brückenplatte 1 befindet sich eine längs zu dieser Platte hin und her bewegbare, im Sinne des Doppelpfeiles 5 verfahrbare Verlängerung 6, deren Arbeitszylinder nicht dargestellt ist und die im ausgefahrenen Zustand gemäss Fig. 1 auf der Plattform eines LKW od. dgl. aufliegt. Da sich die Brückenplatte 1 über die Verlängerung 6 auf der Plattform abstützt, folgt die Brücke evtl. Höhenänderungen der Plattform. Die Brückenplatte 1 wird oben durch ein Blech 7 abgeschlossen, das seitlich in Seitenbleche 8 übergeht.

Die Verlängerung 6 ist an einem Schlitten 9 befestigt, an dem der erwähnte Arbeitszylinder angreift. Der Schlitten 9 trägt vorne das hintere, durchgehende, sich über die Brückenbreite erstreckende Teil 10 der Verlängerung 6, das auf einer Seite der Brücke, und zwar über die Hälfte der Brückenbreite hinweg in einen starr mit dem Teil 10 verbundenen Abschnitt 11 übergeht ; auf der anderen Hälfte der Verlängerung 6 ist der Teil 10 mit einem Scharnier 12 versehen, das zur Anlenkung eines Bereiches 13 dient, der gemäss Fig. 1 nach unten geklappt ist und dabei sich etwa senkrecht nach unten erstreckt. Um den Bereich 13 von der Ruhestellung aus in die Betriebsstellung klappen zu können, wobei er mit dem Abschnitt 11 in einer Ebene liegt, ist ein ihn erfassender und an dem Schlitten 9 angreifender Schwenkzylinder 14 vorgesehen. Bei Nichtbeaufschlägung des Schwenkzylinders 14 klappt der Bereich 13 aufgrund seines Eigengewichtes nach unten in die senkrechte Ruhelage gemäss Fig. 1, was natürlich voraussetzt, dass das im Zylinder befindliche Druckmittel abfliessen kann.

Die durch Strichelung in Fig. 2 schematisch wiedergegebene hydraulische Anlage sieht eine Pumpe 15,

EP 0 342 476 B1

eine Druckleitung 16, ein Schaltventil 17 für den Schwenkzylinder 14 und ein Absenkventil 18 vor. Wird bei geschlossenem Absenkventil 18 die Pumpe 15 angestellt und ist dabei das Schaltventil 17 geöffnet, schwenkt der Hubzylinder 19 die Brückenplatte 1 nach oben. Ist das Schaltventil 17 geöffnet, so wird auch der Schwenkzylinder 14 beaufschlagt, so dass der Bereich 13 ausgeklappt wird, und zwar in die Stellung gemäss Fig. 2, wobei der Bereich 13 voll die Aufgaben des Abschnittes 11 mit übernehmen kann, weil er angelenkt ist und sich hinten steif bei 20 am Teil 10 abstützen kann.

Wird das Schaltventil 17 nicht betätigt, so bleibt der Bereich 13 in der senkrechten Ruhelage gemäss Fig. 1. Dabei übernimmt der Abschnitt 11 alleine die Abstützung auf der Plattform, und die Brücke kann dabei bei solchen LKW od. dgl. benutzt werden, die nur über eine schmale Ladetür bzw. nur über eine Klappe verfügen, die sich z.B. nur über die halbe Breite des LKW od. dgl. erstreckt, wobei es sich versteht, dass die Brücke in diesem Zustand auch bei z.B. nur halbseitig geöffneten Türen verwendet werden kann, was aus wärmetechnischen Gründen von Vorteil sein kann.

Bei geöffnetem Absenkventil 18 sinkt bei abfliessendem Druckmittel die Brückenplatte 1 aufgrund ihres Eigengewichtes ab. Ist dabei das Schaltventil 17 geöffnet, klappt der Bereich 13 aufgrund seines Eigengewichtes nach unten ; ist das Schaltventil 17 hingegen geschlossen, verharrt der Bereich 13 in seiner etwa waagerechten Betriebsstellung, während die Brückenplatte 1 absinkt.

Um bei einem nach unten geklappten Bereich 13 den starr angebrachten Abschnitt 11 weit über die zu be- bzw. entladende Plattform führen zu können, sollte die Länge des schwenkbaren Bereichs 13 etwa 2/3 der Gesamtlänge der Verlängerung 6 betragen (Längen in Brückenlängsrichtung gemessen).

Um die Steifigkeit der Verlängerung 6 sicherzustellen, ist zweckmässigerweise der hintere, sich über die Brückenbreite erstreckende Teil 10 zumindest im Abschnitt des schwenkbaren Bereichs 13 kastenartig ausgeführt ; an diesem Kastenteil ist dann auch der sich nach hinten erstreckende Schlitten 9 — vorzugsweise in Form von sich nach hinten erstreckenden Trägern — befestigt.

## Patentansprüche

1. Überladebrücke für Rampen mit einer an ihrem hinteren, rampenseitigen Ende um eine waagerechte Achse verschwenkbaren Brückenplatte (1), die an ihrem freien Ende mit einer mittels Schlitten ein- und ausfahrbaren, zur Abstützung der Brückenplatte (1) und zur Auflage auf der zu be- bzw. entladenden Plattform (8) dienenden Verlängerung (6) versehen ist, die einen mit dem Schlitten verbundenen hinteren, sich über die Brückenbreite erstreckenden Teil (10) aufweist, an dem vorne sowohl ein starr befestigter Abschnitt (11) als auch eine oder mehrere Bereiche (13) angelenkt sind, die durch mechanische Hilfsmittel von der dem starren Abschnitt (11) entsprechenden Stellung aus um eine Querachse in eine senkrechte Ruhestellung nach unten verschwenkbar sind,dadurch gekennzeichnet, dass die Bereiche (13) in der dem starren Abschnitt (11) entsprechenden Stellung zusammen mit dem starren Abschnitt (11) zum Abstützen der Brückenplatte (1) auf der zu be- bzw. entladenden Plattform (8) dienen und-mittels Schwenk- zylinder (14) verschwenkbar sind.

2. Überladebrücke nach Anspruch 1, dadurch gekennzeichnet, dass nur ein einziger, sich zumindest in etwa über die halbe Brückenbreite erstreckender Bereich (13) vorgesehen ist und sich der Abschnitt (11) über den Rest der Brückenbreite erstreckt.

3. Überladebrücke nach Anspruch 1, dadurch gekennzeichnet, dass Teil (10) mit dem Schlitten (9) verbunden ist.

4. Überladebrücke nach Anspruch 1, dadurch gekennzeichnet, dass der Schwenkzylinder (14) über ein Schaltventil (17) mit der Druckleitung (16) für den Hubzylinder (19) verbunden ist, der zum Verschwenken der, Brückenplatte (1) dient.

5. Überladebrücke nach Anspruch 4, dadurch gekennzeichnet, dass die Bereiche (13) durch Absperren der Druckmittelzufuhr ihres Schwenkzylinders (14) (als einfach-wirkender Arbeitszylinder ausgeführt) in ihrer dem Abschnitt (11) entsprechenden Lage haltbar sind.

6. Überladebrücke nach Anspruch 2, dadurch gekennzeichnet, dass der schwenkbare Bereich (13) von einem seitlichen Rand der Verlängerung ausgeht.

7. Überladebrücke nach Anspruch 1, dadurch gekennzeichnet, dass die Länge des schwenkbaren Bereich (13) im wesentlichen 2/3 der Gesamtlänge der Verlängerung (6) ausmacht.

8. Überladebrücke nach Anspruch 1, dadurch gekennzeichnet, dass der Schwenkzylinder (14) mit seinem hinteren Ende am Schlitten (9) der Verlängerung (6) gelagert ist.

9. Überladebrücke nach Anspruch 1, dadurch gekennzeichnet, dass sich der schwenkbare Bereich (13) bei einer dem Abschnitt (11) entsprechenden Stellung an seinem hinteren Ende (bei 20) fest an dem sich über die Brückenbreite erstreckenden, hinteren Teil (10) der Verlängerung (6) abstützt.

10. Überladebrücke nach Anspruch 1 und 3, dadurch gekennzeichnet, dass der sich über die Brückenbreite

3

erstreckende Teil (10) zumindest im Bereich des schwenkbaren Bereichs (13) kastenartig versteift ist.

## Claims

1. A loading bridge for ramps with a bridge plate (1) which is pivotable at its rear end at the ramp side around a horizontal axis, said bridge plate (1) being provided on its free end with a an extension (6) which is extensible and retractable by means of slides, serving to support the bridge plate (1) and for placement on the platform (8) to be loaded or unloaded, said extension (6) having a rear portion (10) extending across the bridge width and connected to the slide, and on which there are articulated at the front both a rigidly-attached section (11) and one or more areas (13), which are pivotal by mechanical auxiliary means from the position corresponding to the rigid section (11) downwards around a transverse axis into a vertical inoperative position, characterised in that the areas (13) in the position corresponding to the rigid section (11), together with the rigid section (11), serve to support the bridge plate (1) on the platform (8) to be loaded or unloaded, and are pivotal by means of pivoting cylinders (14).

2. A loading bridge according to Claim 1, characterised in that only one single area (13) is provided, extending at least across half the bridge width, and the section (11) extends across the remainder of the bridge width.

3. A loading bridge according to Claim 1, characterised in that the part (10) is connected to the slide (9).

4. A loading bridge according to Claim 1, characterised in that the pivoting cylinder (14) is connected by an on off valve (17) to the pressure line (16) for the lifting cylinder (19) which serves to pivot the bridge plate (1).

5. A loading bridge according to Claim 4, characterised in that the areas (13) are retainable in their position corresponding to the section (11) by closure of the supply of pressure medium to its pivoting cylinder (14) (constructed as a single-acting working cylinder).

6. A loading bridge according to Claim 2, characterised in that the pivotal area (13) originates from a lateral edge of the extension.

7. A loading bridge according to Claim 1, characterised in that the length of the pivotal area (13) is substantially 2/3 of the overall length of the extension (6).

8. A loading bridge according to Claim 1, characterised in that the pivoting cylinder (14) is mounted at its rear end on the slide (9) of the extension (6).

9. A loading bridge according to Claim 1, characterised in that the pivotal area (13), when in a position corresponding to section (11), is securely supported at its rear end (at 20) on the rear portion (10) of the extension (6) extending across the bridge width.

10. A loading bridge according to Claims 1 and 3, characterised in that the portion (10) extending across the bridge width is stiffened by a box-type structure at least in the region of the pivotal area (13).

## Revendications

1. Pont de transbordement pour des quais, comprenant un tablier de pont (1), qui est monté basculant par rapport à un axe horizontal par son extrémité du côté du quai et qui est muni à son extrémité libre d'un prolongement (6) pouvant être escamoté et déployé au moyen d'un chariot, destiné à soutenir le tablier (1) et à s'appuyer sur la plate-forme (8) à charger et à décharger et comportant une pièce arrière (10), reliée au chariot, s'étendant sur la largeur du pont et à l'avant de laquelle sont articulées à la fois une section (11) fixée rigidement et une ou plusieurs parties (13) basculant vers le bas, par rapport à un axe transversal, de la position correspondant à la section (11) rigide à une position verticale de repos, caractérisé en ce que les parties (13) servent, en la position qui correspond à la section (11) rigide, avec celle-ci (11) à soutenir le tablier (1) sur la plate-forme (8) à charger et à décharger et peuvent basculer au moyen d'un vérin de basculement (14).

2. Pont de transbordement suivant la revendication 1, caractérisé en ce qu'il n'est prévu qu'une seule partie (13) s'étendant sur au moins à peu près la moitié de la largeur du pont et la section (11) s'étend sur le reste de la largeur du pont.

3. Pont de transbordement suivant la revendication 1, caractérisé en ce que le pièce (10) est reliée au chariot (9).

4. Pont de transbordement suivant la revendication 1, caractérisé en ce que le vérin de basculement (14) communique, par une vanne de commande (17), avec le conduit sous pression (16) du vérin de levage (19) qui sert à faire basculer le tablier de pont (1).

5. Pont de transbordement suivant la revendication 4, caractérisé en ce que les parties (13) peuvent être maintenues, en interrompant l'arrivée du fluide de pression de leur vérin de basculement (14) (constitué en vérin de fonctionnement à simple effet), en leur position correspondant à la section (11).

6. Pont de transbordement suivant la revendication 2, caractérisé en ce que la partie basculante (13) est issue d'un bord latéral du prolongement.

7. Pont de transbordement suivant la revendication 1 ; caractérisé en ce que la longueur de la partie basculante (13) représente sensiblement les 2/3 de la longueur totale du prolongement (6).

8. Pont de transbordement suivant la revendication 1, caractérisé en ce que le vérin de basculement (14) est monté, par son extrémité arrière, sur le chariot (9) du prolongement (6).

9. Pont de transbordement suivant la revendication 1, caractérisé en ce que la partie (13) basculante s'appuie, pour une position adéquate du tronçon (11), solidement par son extrémité arrière (en 20) à la pièce (10) arrière du prolongement (6), cette pièce s'étendant sur la largeur du pont.

10. Pont de transbordement suivant la revendication 1 ou 3, caractérisé en ce que la pièce (10) s'étendant sur la largeur du pont est rigidifiée en forme de caisson, au moins dans la région de la partie (13) basculante.

Fig. 1

Fig. 2